# EUROPEAN PATENT APPLICATION

(11) **EP 1 925 816 A1**
(43) Date of publication of application: **28.05.2008**
(21) Application number: 06782882.2
(22) Date of filing: 22.08.2006
(51) Int. Cl.: F02N 17/02, B60H 1/08, F01P 3/20, F02N 17/06, F24F 5/00, F28D 20/02

(54) **WARMING-UP DEVICE OF INTERNAL COMBUSTION ENGINE**

(30) Priority: 22.08.2005 JP 2005239944; 14.12.2005 JP 2005360405
(71) Applicant: Toyota Jidosha Kabushiki Kaisha, Toyota-shi, Aichi-ken, 471-8571 (JP)
(72) Inventor: HAMAGUCHI, Ryu, Toyota-shi, Aichi 471-8571 (JP); SHIKIDA, Takasuke, Toyota-shi, Aichi 471-8571 (JP)
(74) Representative: Kuhnen & Wacker
(86) International application number: PCT/JP2006/316378
(87) International publication number: WO 2007/023794

(57) **Abstract**

A container (14), which contains a latent heat storage material (X), is provided in a water jacket (13) of an internal combustion engine. A nucleation device (2) is provided in the container. The nucleation device includes a plate-like member (29), which is formed of bimetal, a water wheel (25), which is located in the water jacket, a rotating body (23), which is located in the container, and claws (24), which extend radially from the rotating body. When coolant starts circulating in the water jacket as the engine is started, the water wheel is rotated, thereby rotating the claws of the rotating body. The claws scratch the surface of the plate-like member to form a new surface. The nucleation device operates to nucleate the heat storage material by bringing the new surface into direct contact with the supercooled heat storage material. Thus, an inexpensive warming-up device of the internal combustion engine having a simple structure is provided.

## Description

### TECHNICAL FIELD

The present invention relates to a warming-up device that warms up an internal combustion engine when the engine is started by rapidly increasing the temperature inside the engine.

### BACKGROUND ART

In general, when starting an internal combustion engine, if the internal temperature of the engine, in particular, the temperature of the cylinder wall and the temperature of the combustion chamber are low, friction loss relative to the movement of the piston is increased, and the composition of exhaust gas is deteriorated.

Thus, for example, Patent Document 1 proposes a warming-up device which accommodates a latent heat storage material inside an internal combustion engine. The heat storage material stores heat generated by operating the internal combustion engine. The heat stored in the heat storage material is radiated when the engine is restarted after being stopped and accelerates the warming-up of the internal combustion engine.

The warming-up device of Patent Document 1 is equipped with a nucleation device including a pair of electrodes inserted in the heat storage material. The nucleation device is operated by applying electric voltage to the electrodes from the outside. That is, the supercooled heat storage material is nucleated to generate phase change of the heat storage material so that heat is radiated from the heat storage material.

A nucleation device disclosed in Patent Document 2 includes a disc spring arranged in a heat storage material and an external pressurizer, which is connected to the disc spring via an operation rod. When the pressurizer reciprocates the operation rod, the disc spring is inverted, and the nucleation device starts operating. In this manner, the supercooled heat storage material is nucleate to generate phase change of the heat storage material so that heat is radiated from the heat storage material.

However, in the conventional nucleation devices, the heat storage material is nucleate by applying electric voltage to the electrodes or inverting the disc spring by reciprocating the operation rod. Thus, the structure of the nucleation devices is very complicated, and the costs are increased.
Patent Document 1: Japanese Laid-Open Patent Publication No. 11-182393
Patent Document 2: Japanese Laid-Open Patent Publication No. 6-257973

### DISCLOSURE OF THE INVENTION

Accordingly, it is an objective of the present invention to provide an inexpensive warming-up device of an internal combustion engine that has a simple structure.

In accordance with one aspect of the present invention, a warming-up device of an internal combustion engine is provided. The warming-up device includes a latent heat storage material accommodated in the engine. The heat storage material is capable of becoming supercooled. A nucleation device is provided inside the heat storage material. The nucleation device includes a first sliding member and a second sliding member, which slide with respect to each other. The nucleation device operates to generate phase change of the heat storage material by nucleating the supercooled heat storage material from sliding portions between the sliding members.

### BRIEF DESCRIPTION OF THE DRAWINGS

Fig. 1 is a cross-sectional view illustrating an internal combustion engine equipped with a warming-up device according to a first embodiment of the present invention as viewed in a direction of the crankshaft;
Fig. 2A is a cross-sectional view illustrating a state where a plate-like member accommodated in the water jacket of Fig. 1 is deformed to a sliding position where the plate-like member slides with respect to claws of a rotating body;
Fig. 2B is a cross-sectional view illustrating a state where the plate-like member in Fig. 2A is deformed to a retracted position where the plate-like member in Fig. 2A retracts from the claws of the rotating body;
Fig. 3 is a cross-sectional view illustrating a nucleation device according to a modification of the first embodiment;
Fig. 4 is a cross-sectional view illustrating a nucleation device according to another modification of the first embodiment;
Fig. 5 is a cross-sectional view illustrating a nucleation device according to another modification of the first embodiment;
Fig. 6A is a cross-sectional view illustrating a nucleation device of a warming-up device according to a second embodiment of the present invention, and a state before the pressure of the coolant acts on the disc-like plate material;
Fig. 6B is a cross-sectional view illustrating a state where the pressure of the coolant acts on the disc-like plate material of Fig. 6A;
Fig. 7 is a cross-sectional view illustrating a nucleation device according to a modification of the second embodiment;
Fig. 8 is a cross-sectional view illustrating a nucleation device according to another modification of the second embodiment;
Fig. 9 is a cross-sectional view illustrating a nucleation device according to another modification of the second embodiment;
Fig. 10A is a cross-sectional view illustrating a state before the pressure of the coolant acts on the disc-like plate material of a nucleation device according to another modification of the second embodiment;
Fig. 10B is a cross-sectional view illustrating a state where the pressure of the coolant acts on the disc-like plate material of Fig. 10A;
Fig. 11A is a cross-sectional view illustrating a nucleation device of a warming-up device according to a third embodiment of the present invention, and a balanced state of a collar member achieved by urging springs;
Fig. 11B is a cross-sectional view illustrating a state where the balanced state in Fig. 11A is cancelled;
Fig. 12 is a side view illustrating a nucleation device of a warming-up device according to a fourth embodiment of the present invention; and
Fig. 13 is a side view illustrating a nucleation device of a warming-up device according to a fifth embodiment of the present invention.

### BEST MODE FOR CARRYING OUT THE INVENTION

The best mode for carrying out the invention will now be described in detail with reference to drawings.

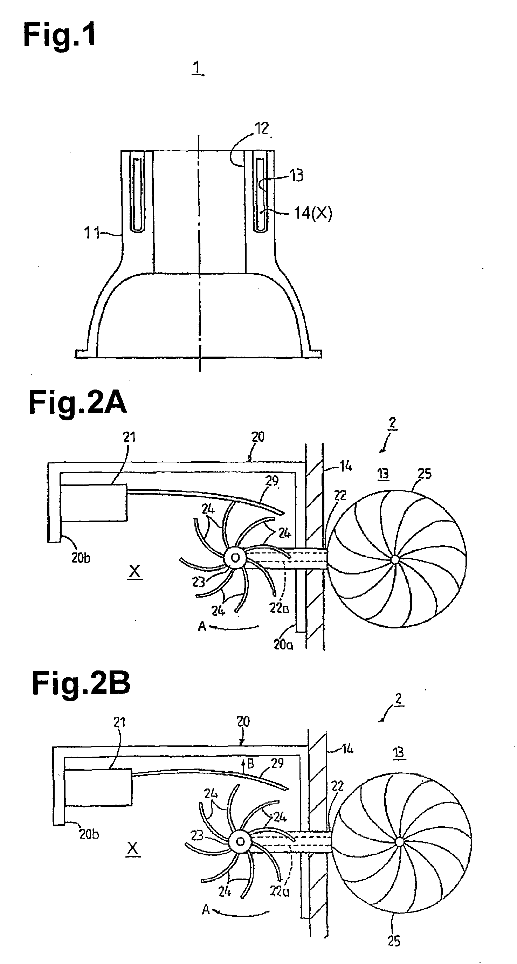

Fig. 1 is a cross-sectional view of an internal combustion engine equipped with a warming-up device according to a first embodiment of the present invention as viewed from a crankshaft. The internal combustion engine 1 includes a cylinder block 11 in which a water jacket 13 is formed to surround cylinders 12. The water jacket 13 accommodates a container 14 filled with latent heat storage material X consisting of, for example, trihydrate sodium acetate (CH₃COONA-3H₂O). The container 14 is formed of a synthetic resin having a high thermal conductivity. The melting point of trihydrate sodium acetate is 58°C. The heat storage material X, which is trihydrate sodium acetate in the first embodiment, has property in which although it is cooled from a temperature exceeding the melting point to a temperature less than or equal to the melting point, a phase change from a liquid phase to a solid phase does not occur, and is supercooled to -20°C to -30°C while storing latent heat.

As shown in Figs. 2A and 2B, a nucleation device 2, which operates to generate the phase change of the heat storage material X, is located inside the container 14. In a case where the temperature of the internal combustion engine 1 is decreased and the heat storage material X is supercooled, the nucleation device 2 is operated by vibration generated at starting of the internal combustion engine 1 so that the phase change of the heat storage material X to the solid phase is generated to promptly release latent heat. Furthermore, after releasing latent heat by the phase change to the solid phase, the heat storage material X receives heat from the cylinder block 11. When the temperature exceeds the melting point, the phase of the heat storage material X is changed to the liquid phase and latent heat is stored.

The nucleation device 2 includes a support frame 20, a support piece 21, a shaft frame member 22, a rotating body 23, claws 24, a water wheel 25, and a plate-like member 29. The support frame 20 has a substantially channel-like cross-section. A first side piece 20a of the support frame 20 (right side piece in Fig. 2) is secured to the inner side surface of the container 14. The support piece 21 is fixed on a second side piece 20b of the support frame 20 (left side piece in Fig. 2).

The shaft frame member 22 extends through substantially the center of the first side piece 20a of the support frame 20 in the vertical direction and corresponding part of the side wall of the container 14 so that the shaft frame member 22 is arranged in both the container 14 and the water jacket 13. A shaft 22a is rotatably supported in the shaft frame member 22, which is substantially cylindrical. The rotating body 23 is provided on the left end of the shaft frame member 22 located in the container 14. The rotating body 23 is coupled to the left end of the shaft 22a such that the rotating body 23 is rotatable about a rotation axis perpendicular to the shaft 22a.

First sliding members, which are the claws 24 in the first embodiment, are provided around the rotating body 23 at predetermined intervals. The claws 24 extend substantially radially from the rotating body 23. The water wheel 25 is provided on the right end of the shaft frame member 22 located in the water jacket 13. The water wheel 25 is coupled to the right end of the shaft 22a such that the water wheel 25 is rotatable about a rotation axis perpendicular to the shaft 22a.

The water wheel 25 is rotated by coolant that circulates in the water jacket 13 as the internal combustion engine 1 is started. The rotational force of the water wheel 25 is transmitted to the rotating body 23 in the container 14 via the shaft 22a. The rotational force transmitted to the rotating body 23 rotates the claws 24 in a direction indicated by arrow A in Fig. 2A.

A second sliding member, which is the plate-like member 29 in the first embodiment, extends from the support piece 21 toward the first side piece 20a of the support frame 20 while being gently curved. The plate-like member 29 is formed of bimetal. When the temperature of the heat storage material X in the container 14 is less than 40°C, the plate-like member 29 deforms to a sliding position (position shown in Fig. 2A) at which the plate-like member 29 slides with respect to the claws 24 of the rotating body 23. When the temperature of the heat storage material X is 40°C or more, the plate-like member deforms in a direction indicated by arrow B in Fig. 2B until it reaches a retracted position (position shown in Fig. 2B) at which the plate-like member does not slide with respect to the claws 24 of the rotating body 23.

The plate-like member 29 and the claws 24 of the rotating body 23 directly contact the heat storage material X, and when the heat storage material X is cooled to a temperature less than 40°C, for example, to a supercooled state, the plate-like member 29 is deformed to the sliding position shown in Fig. 2A. Thus, when the water wheel 25 is rotated by the coolant that circulates in the water jacket 13 as the internal combustion engine 1 is started, the rotational force of the water wheel 25 is transmitted to the rotating body 23 via the shaft 22a, thereby rotating the claws 24, which slide on the plate-like member 29 and scratch the surface of the plate-like member 29, thereby forming a new surface. The new surface is brought into direct contact with the supercooled heat storage material X, thereby nucleating the heat storage material X. In this manner, the nucleation device 2 is operated. Based on the operation of the nucleation device 2, the phase change of the heat storage material X to the solid phase is generated, and latent heat is promptly released to the cylinder block 11. In this case, the water wheel 25 is oriented to be easily rotated by the coolant that circulates in the water jacket 13 as the internal combustion engine 1 is started.

The first embodiment has the following advantages.
(1) The nucleation device 2 operates to nucleate the heat storage material X from the sliding portions between the plate-like member 29 and the claws 24 of the rotating body 23 in the heat storage material X. Thus, for example, compared to cases where the heat storage material is nucleate by applying electric voltage to the electrodes or inverting the disc spring by reciprocation of the operation rod, the structure of the nucleation device 2 is much simplified and costs are reduced.
(2) The water wheel 25 is rotated by the coolant that circulates in the water jacket 13 as the internal combustion engine 1 is started. The rotational force of the water wheel 25 is transmitted to the rotating body 23 via the shaft 22a, and as a result, the claws 24 of the rotating body 23 on the plate-like member 29. The claws 24 scratch the plate-like member 29 to form a new surface on the surface of the plate-like member 29. The new surface directly contacts the supercooled heat storage material X. This causes the nucleation device 2 to operate so as to nucleate the heat storage material X. Thus, heat is radiated from the heat storage material X when the internal combustion engine 1 is started, and the internal combustion engine 1 is smoothly warmed up. Furthermore, since the rotating body 23 is driven based on the pressure of fluid, that is, the pressure of the coolant generated when the internal combustion engine 1 is started, the plate-like member 29 is reliably scratched by the claws 24 with a stable force to form a new surface.
(3) The claws 24 of the rotating body 23, which is rotated as the internal combustion engine 1 is started, slide with respect to and scratch the plate-like member 29 located on the rotational path of the claws 24. This forms a new surface, thereby reliably nucleating the heat storage material X. Such a mechanism is very advantageous in warming up the internal combustion engine 1 by the heat radiation from the heat storage material X.
(4) When the temperature of the heat storage material X in the container 14 is less than 40°C, the plate-like member 29, which is formed of bimetal, moves to the sliding position (position shown in Fig. 2A) at which the plate-like member 29 slides with respect to the claws 24 of the rotating body 23, and when the temperature of the heat storage material X becomes greater than or equal to 40°C, the plate-like member 29 moves toward the direction indicated by arrow B in Fig. 2B until it reaches the retracted position (position shown in Fig. 2B) at which the plate-like member 29 does not slide on the claws 24 of the rotating body 23. Thus, when the plate-like member 29 does not need to slide with respect to the claws 24, that is, when the heat storage material X becomes greater than or equal to 40°C by the operation of the nucleation device 2, noise caused by unnecessary sliding of the claws 24 is reduced. Furthermore, this extends life of the plate-like member 29. Moreover, since the plate-like member 29 is formed of bimetal, the plate-like member 29 automatically moves in accordance with the temperature change. Thus, it is unnecessary to manipulate the plate-like member 29 from the outside, and the structure of the nucleation device 2 is simplified.

In the first embodiment, the water wheel 25 is rotated by the coolant that circulates in the water jacket 13 as the internal combustion engine 1 is started, and the rotational force is transmitted to the rotating body 23 via the shaft 22a to rotate the claws 24. However, the mechanism for rotating the rotating body 23 is not limited to this.

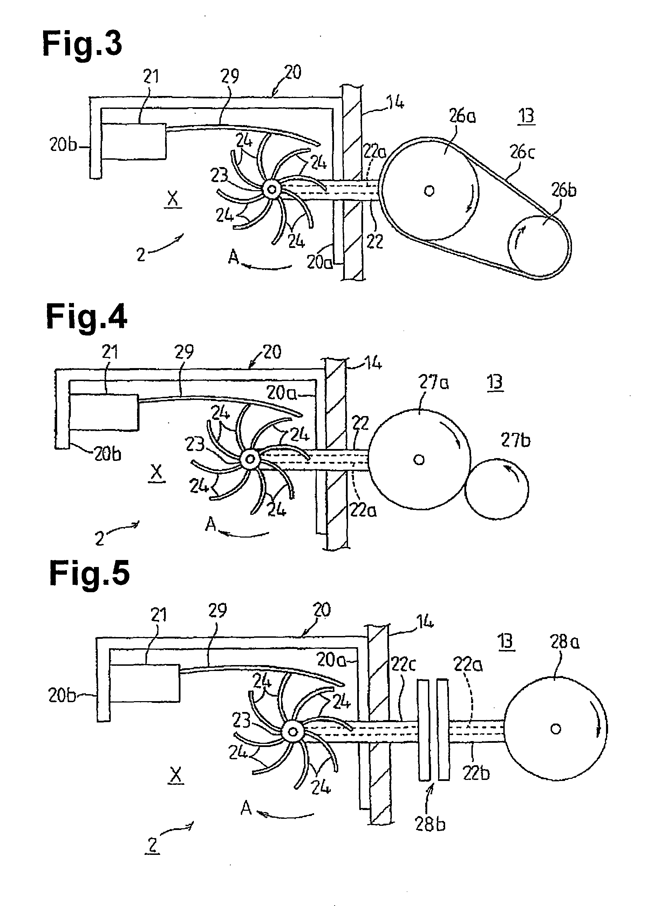

For example, as shown in Fig. 3, a driven pulley 26a is provided on the right end of the shaft frame member 22 located in the water jacket 13, and the driven pulley 26a is coupled to the right end of the shaft 22a to be rotatable about a rotation axis perpendicular to the shaft 22a. Furthermore, a drive pulley 26b, which is rotated by rotation of the crankshaft, is arranged in the water jacket 13 in the vicinity of the driven pulley 26a. The rotational force of the drive pulley 26b is transmitted to the driven pulley 26a by a belt 26c, which extends between the drive pulley 26b and the driven pulley 26a. The claws 24 may be rotated by transmitting the rotational force transmitted to the driven pulley 26a to the rotating body 23 via the shaft 22a.

Furthermore, as shown in Fig. 4, a driven gear 27a is provided on the right end of the shaft frame member 22 located in the water jacket 13, and the driven gear 27a is coupled to the right end of the shaft 22a in the shaft frame member 22 to be rotatable about a rotation axis perpendicular to the shaft 22a. Furthermore, a drive gear 27b, which is rotated by the crankshaft, is arranged in the water jacket 13 in the vicinity of the driven gear 27a. The drive gear 27b engages with the driven gear 27a. The rotational force of the drive gear 27b is transmitted to the driven gear 27a, and the rotational force transmitted to the driven gear 27a is transmitted to the rotating body 23 via the shaft 22a. The claws 24 may be rotated in this manner.

Furthermore, as shown in Fig. 5, a rotating body 28a, which is rotated by rotation of the crankshaft, is arranged in the water jacket 13 where the right end of the shaft frame member 22 is located. The shaft frame member 22 is divided into a first section 22b and a second section 22c. An electromagnetic clutch 28b, which selectively disconnects and connects transmission of the rotational force via the shaft 22a, may be provided between the first section 22b and the second section 22c. When rotation of the claws 24 is unnecessary, that is, when the operation of the nucleation device 2 makes the temperature of the heat storage material X to be greater than or equal to 40°C, the transmission of the rotational force via the shaft 22a by the electromagnetic clutch 28b is disconnected. This reduces noise generated by unnecessary rotation of the claws 24.

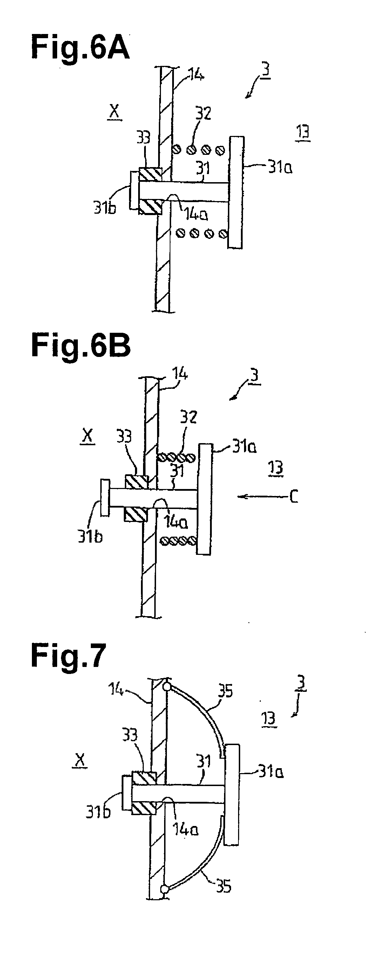

Next, a second embodiment of the present invention will be described with reference to Figs. 6A and 6B. In the second embodiment, the structure of the nucleation device is modified. Since the structure other than the nucleation device is the same as that in the first embodiment, like members are given like numbers and detailed explanations are omitted.

As shown in Fig. 6A, a nucleation device 3 includes a shaft member 31, a disc-like plate material 31a, a stopper 31b, an urging spring 32, and a rubber scraping member 33. A first sliding member, which is the shaft member 31 in the second embodiment, extends through a through hole 14a formed in the side wall of the container 14. The disc-like plate material 31a is integrally attached to the right end of the shaft member 31.

The urging spring 32 is mounted in the water jacket 13 between the disc-like plate material 31a and the side wall of the container 14 in a compressed state. An elastic body, which is the urging spring 32 in the second embodiment, urges the shaft member 31 in a direction opposite to the container 14 (right side in Fig. 6). The stopper 31b is attached to the left end of the shaft member 31. The stopper 31b restricts the shaft member 31, which is urged by the urging spring 32, from moving by a predetermined amount or more in the direction opposite to the container 14.

The annular rubber scraping member 33 is attached to the rim of the through hole 14a of the container 14. A second sliding member, which is the rubber scraping member 33 in the second embodiment, closely contacts the shaft member 31, and scrapes the surface of the shaft member 31 when the shaft member 31 slides in the axial direction.

When the internal combustion engine 1 is stopped, the shaft member 31 is urged in a direction opposite to the container 14 by the urging spring 32, but is restricted from moving by the predetermined amount or more by the stopper 31b. Part of the shaft member 31 protruding outside from the side wall of the container 14 contacts the coolant in the water jacket 13.

As shown in Fig. 6B, when the internal combustion engine 1 is started, the pressure of the coolant generated in the water jacket 13 acts on the disc-like plate material 31a in a direction indicated by arrow C shown in Fig. 6B. The shaft member 31 is then urged toward the container 14 (left side in Fig. 6) against the force of the urging spring 32, and slides with respect to the rubber scraping member 33. As the shaft member 31 slides with respect to the rubber scraping member 33, the surface of the shaft member 31 is scraped to form a new surface, and the new surface directly contacts the supercooled heat storage material X. This causes the nucleation device 3 to be operated to nucleate the heat storage material X. The operation of the nucleation device 3 generates the phase change of the heat storage material X to the solid phase, and latent heat is promptly released to the cylinder block 11. The disc-like plate material 31a is oriented so that the pressure of the coolant generated in the water jacket 13 at the starting of the internal combustion engine 1 easily acts on the disc-like plate material 31a.

The second embodiment has the following advantages.
(21) The nucleation device 3 operates to nucleate the heat storage material X from the sliding portion between the shaft member 31 and the rubber scraping member 33 in the heat storage material X. Thus, for example, compared to the cases where the heat storage material is nucleate by applying electric voltage to the electrodes or inverting the disc spring, the structure of the nucleation device 3 is much simplified and the costs are reduced.
(22) When the pressure of the coolant generated in the water jacket 13 at the starting of the internal combustion engine 1 acts on the disc-like plate material 31a to urge the shaft member 31 toward the container 14, the shaft member 31 slides with respect to the rubber scraping member 33. When the shaft member 31 is scraped by sliding with respect to the rubber scraping member 33, a new surface is formed on the surface of the shaft member 31. The new surface is brought into direct contact with the supercooled heat storage material X so that the heat storage material X is nucleate. The nucleation device 3 is operated in this manner. Thus, the shaft member 31 is scraped against the rubber scraping member 33 using the pressure of the coolant generated at the starting of the internal combustion engine 1 as a drive source. In this manner, by operating the nucleation device 3 at the starting of the internal combustion engine 1 to nucleate the heat storage material X, the internal combustion engine 1 is reliably warmed up by heat radiation from the heat storage material X.

In the second embodiment, the urging spring 32 for urging the shaft member 31 in the direction opposite to the container 14 is a coil spring, but this may be changed.

For example, as shown in Fig. 7, elastic bodies, which are a pair of leaf spring members 35, are arranged in the water jacket 13 between the disc-like plate material 31a and the side wall of the container 14. The leaf spring members 35 are arranged about the axis of the shaft member 31 at intervals of 180 degrees. The leaf spring members 35 may urge the shaft member 31 in a direction opposite to the container 14 (right side in Fig. 7).

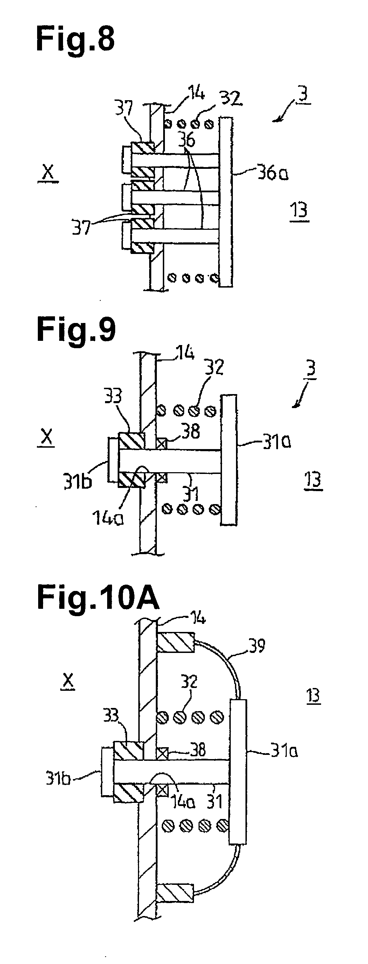

Furthermore, in the second embodiment, the single shaft member 31 slides with respect to the rubber scraping member 33 to be scraped. However, as shown in Fig. 8, a number of (three in Fig. 8) shaft members 36 may be provided integrally with a disc-like plate material 36a having an enlarged diameter. Annular rubber scraping members 37 may be mounted on rims of through holes 14a of the container 14. Each of the rubber scraping members 37, which serves as the second sliding member, closely contacts corresponding one of the shaft members 36 separately, and scrapes the surface of the corresponding shaft member 36. In this case, by the pressure of the coolant generated at the starting of the internal combustion engine 1, each shaft member 36 is separately scraped. This is very advantageous in reliably nucleating the heat storage material X.

Furthermore, as shown in Fig. 9, an annular sealing member 38 may be provided at the through hole 14a formed in the side wall of the container 14 on the side of the container 14 facing the water jacket 13. The sealing member 38 may seal the shaft member 31 in the water jacket 13. In this case, the sealing performance in the water jacket 13 is improved, thus effectively preventing the coolant from entering the container 14.

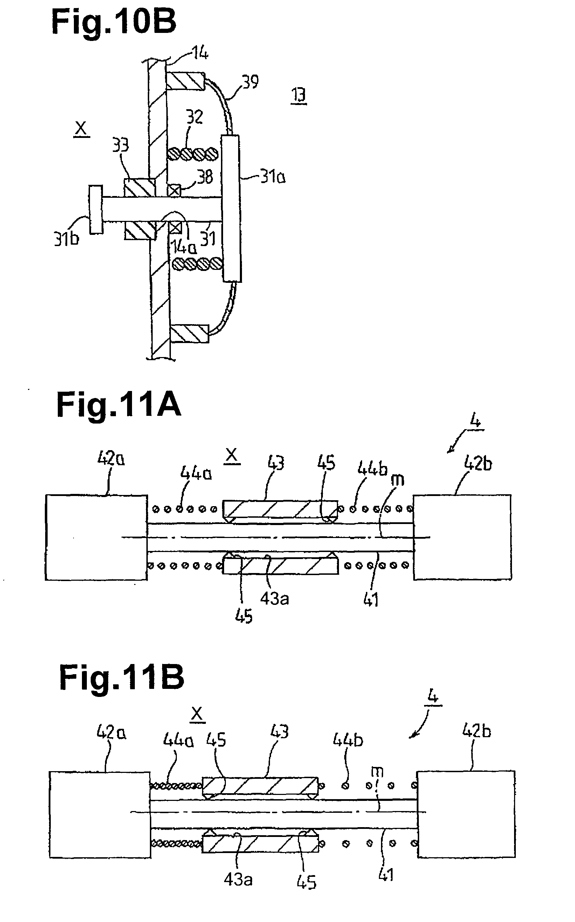

Furthermore, in the second embodiment, part of the shaft member 31 protruding outside from the side wall of the container 14 when the internal combustion engine 1 is stopped is in contact with the coolant in the water jacket 13. However, as shown in Figs. 10A and 10B, a boot 39 may surround a space between the outer edge of the disc-like plate material 31a and the side wall of the container 14. That is, part of the shaft member 31 protruding outside from the side wall of the container 14 may be designed not to contact the coolant in the water jacket 13 both in the state before the pressure of the coolant acts on the disc-like plate material 31a (state shown in Fig. 10A) and the state where the pressure of the coolant acts on the disc-like plate material 31a (state shown in Fig. 10B). In this case, the coolant is further effectively prevented from entering the container 14.

A third embodiment of the present invention will now be described with reference to Figs. 11A and 11B. In the third embodiment, the structure of the nucleation device is modified. Since the structure other than the nucleation device is the same as that in the first embodiment, like members are given like numbers and detailed explanations are omitted.

As shown in Fig. 11A, a nucleation device 4 includes a shaft member 41, a first stopper member 42a, a second stopper member 42b, a collar member 43, a first urging spring 44a, a second urging spring 44b, and a pair of metal scraping members 45. A first sliding member, which is the shaft member 41 in the third embodiment, is arranged in the container 14. A rod-like member, which is the shaft member 41 in the third embodiment, is a cylindrical metal. The stopper members 42a, 42b are attached to the ends of the shaft member 41. The cylindrical collar member 43 is supported between the stopper members 42a, 42b to be movable in a direction of the axis m of the shaft member 41. The collar member 43 is arranged on the outer circumferential surface of the shaft member 41 with a gap provided in between.

The urging springs 44a, 44b urge the collar member 43 to be balanced on the shaft member 41. The balanced collar member 43 is located substantially at the center between the stopper members 42a, 42b. The pair of annular metal scraping members 45 are attached to the first end (left end in Fig. 11) and the second end (right end in Fig. 11) of an inner circumferential surface 43a of the collar member 43, respectively. The annular metal scraping members 45 are located in the gap between the collar member 43 and the shaft member 41. The inner circumferential surface 43a of the collar member 43 is parallel to the direction of the axis m, which is a swinging direction of the collar member 43 serving as a weight.

The balanced state of the collar member 43 achieved by the urging springs 44a, 44b is cancelled by vibration generated at the starting of the internal combustion engine 1. When the balanced state is cancelled, the collar member 43 moves along the shaft member 41. At this time, second sliding members, which are the metal scraping members 45 in the third embodiment, closely contact and slide with respect to the outer circumferential surface of the shaft member 41, thereby scraping the outer circumferential surface of the shaft member 41. Weights and conical members, which are the metal scraping members 45 in the third embodiment, are formed to have triangular cross-sections so that the acute vertexes contact the outer circumferential surface of the shaft member 41.

The first urging spring 44a (on left side in Fig. 11) is mounted between the first stopper member 42a (left side in Fig. 11) and the first end surface (left end surface in Fig. 11) of the collar member 43 in a compressed state. The second urging spring 44b (on right side in Fig. 11) is mounted between the second stopper member 42b (on right side in Fig. 11) and the second end surface (on right end surface in Fig. 11) of the collar member 43 in a compressed state.

As shown in Fig. 11B, when the balanced state of the collar member 43 achieved by the urging springs 44a, 44b is cancelled by the vibration generated at the starting of the internal combustion engine 1, the collar member 43 slides along the shaft member 41. At this time, the metal scraping members 45 scrape the outer circumferential surface of the shaft member 41, and form a new surface. The nucleation device 4 operates to nucleate the heat storage material X by bringing the new surface into direct contact with the supercooled heat storage material X. The operation of the nucleation device 4 generates the phase change of the heat storage material X to the solid phase so that latent heat is promptly released to the cylinder block 11. The nucleation device 4 is arranged such that the axis m of the shaft member 41 extends substantially vertically so that the collar member 43 easily moves in the direction of the axis m of the shaft member 41 when the balanced state of the collar member 43 is cancelled.

The third embodiment has the following advantages.
(31) The nucleation device 4 operates to nucleate the heat storage material X from the sliding portions between the shaft member 41 and the metal scraping members 45 in the heat storage material X. Thus, for example, compared to the cases where the heat storage material is nucleated by applying electric voltage to the electrodes or inverting the disc spring, the structure of the nucleation device 4 is much simplified and the costs are reduced.
(32) When the balanced state achieved by the urging springs 44a, 44b is cancelled by vibration generated at the starting of the internal combustion engine 1, the collar member 43 slides along the shaft member 41. At this time, the metal scraping members 45 scrape the outer circumferential surface of the shaft member 41 so that a new surface is formed. The nucleation device operates to nucleate the heat storage material X by bringing the new surface into direct contact with the supercooled heat storage material X. Thus, the shaft member 41 is scraped by the metal scraping members 45 using the vibration generated at the starting of the internal combustion engine 1 as a drive source. Thus, the heat storage material X is nucleated at the starting of the internal combustion engine 1 so that the internal combustion engine 1 is reliably warmed up by the heat radiation from the heat storage material X.
(33) Since the metal scraping members 45 are driven by the vibration generated at the starting of the internal combustion engine 1, the pressure of the coolant is unnecessary. That is, since the nucleation device 4 does not need to be exposed inside the water jacket 13, the waterproof mechanism of the heat storage material X is simplified. Thus, the structure of the nucleation device 4 is further simplified.

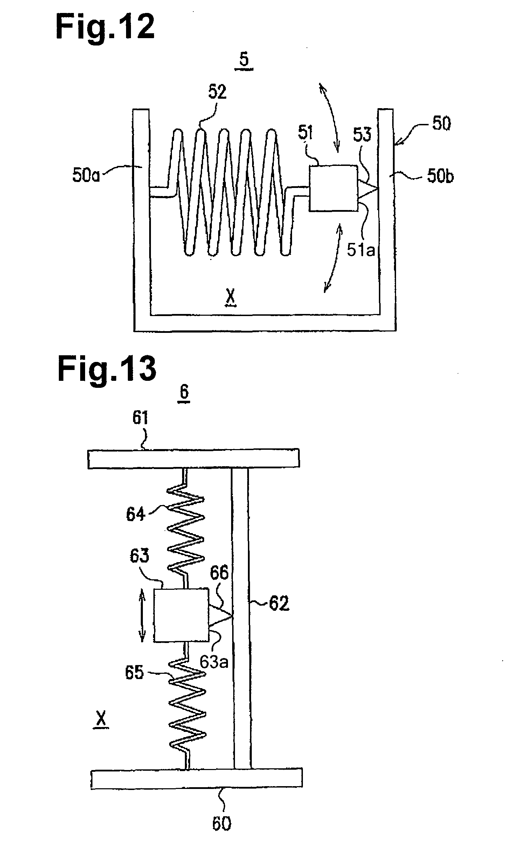

A fourth embodiment of the present invention will now be described with reference to Fig. 12. In the fourth embodiment, the structure of the nucleation device is modified. Since the structure other than the nucleation device is the same as that in the first embodiment, like members are given like numbers and detailed explanations are omitted.

As shown in Fig. 12, a nucleation device 5 includes a metal member 50, a weight 51, a coil spring 52, and a claw 53. The metal member 50 has a substantially channel-like cross-section, and is secured to the inner bottom surface of the container 14. The proximal end of the coil spring 52 (left end in Fig. 12) is attached to a first vertical wall 50a (left side vertical wall in Fig. 12) of the metal member 50. The substantially cubic weight 51 is attached to the distal end of a suspension member, which is the coil spring 52 in the fourth embodiment. The weight 51 swings vertically in Fig. 12 using the proximal end of the coil spring 52 as a fulcrum. The weight 51 has a right side surface 51a, which is substantially parallel to the swinging direction of the weight 51 (vertical direction in Fig. 12). A first sliding member, which is the substantially conical claw 53 in the fourth embodiment, projects from the right side surface 51a of the weight 51.

A second vertical wall 50b (right side vertical wall in Fig. 12) of the metal member 50 is a metal plate. The second vertical wall 50b functions as a second sliding member, which contacts the distal end of the claw 53 when the weight 51 is in the balanced state as shown in Fig. 12. When vibration is generated at the starting of the internal combustion engine 1, the coil spring 52 swings the weight 51 vertically using its proximal end attached to the first vertical wall 50a of the metal member 50 as a fulcrum. Then, the distal end of the claw 53 slides along the second vertical wall 50b of the metal member 50, thereby forming a new surface. The nucleation device 5 is operated by exposing the new surface to the heat storage material X, which generates the phase change of the heat storage material X to the solid phase so that latent heat is promptly released to the cylinder block 11. When vibration generated at the starting of the internal combustion engine 1 is stopped, the coil spring 52 ends the vertical swing of the weight 51, and keeps the weight 51 in the balanced state.

The fourth embodiment has the following advantages.
(41) The weight 51 becomes imbalanced by the vibration generated at the starting of the internal combustion engine 1, and is swung vertically with the proximal end of the coil spring 52 serving as a fulcrum. At this time, the distal end of the claw 53 slides along the second vertical wall 50b of the metal member 50, thereby forming a new surface. In this manner, the nucleation device 5 operates to expose the new surface to the heat storage material X. Thus, for example, compared to the cases where the heat storage material is nucleated by applying electric voltage to the electrodes or inverting the disc spring, the structure of the nucleation device 5 is much simplified and the costs are reduced.
(42) The coil spring 52, which keeps the weight 51 to be balanced, reliably presses the distal end of the claw 53 against the second vertical wall 50b of the metal member 50 while swinging the weight 51 vertically. Thus, the distal end of the claw 53 reliably slides against the second vertical wall 50b of the metal member 50 while following the second vertical wall 50b. This increases the opportunities for the nucleation device 5 to be operated, and the phase change of the supercooled heat storage material X is easily generated. Thus, the heat is reliably radiated from the heat storage material X.
(43) The spring constant of the coil spring 52 is easily set corresponding to the vibration generated at the starting of the internal combustion engine 1. Thus, tuning is easily performed corresponding to the weight 51.

A fifth embodiment of the present invention will now be described with reference to Fig. 13. In the fifth embodiment, the structure of the nucleation device is modified. Since the structure other than the nucleation device is the same as that in the first embodiment, like members are given like numbers and detailed explanations are omitted.

As shown in Fig. 13, a nucleation device 6 includes a first support member 60, a second support member 61, a metal plate 62, a weight 63, coil springs 64, 65, and a claw 66. The substantially flat plate-like first support member 60 is secured to the inner bottom surface of the container 14. The substantially flat plate-like second support member 61 is secured to the upper surface in the container 14 so as to face the first support member 60 above the first support member 60. A second sliding member, which is the substantially flat plate-like metal plate 62 in the fifth embodiment, includes a lower end attached to the first support member 60, and an upper end attached to the second support member 61. Suspension members, which are the pair of upper and lower coil springs 64, 65 in the fifth embodiment, suspend the substantially cubic weight 63 to be vertically swingable between the first and second support members 60, 61. The weight 63 has a right side surface 63a, which is substantially parallel to a swinging direction of the weight 63. The substantially conical claw 66 projects from the right side surface 63a toward the metal plate 62. The distal end of a first sliding member, which is the claw 66 in the fifth embodiment, contacts the metal plate 62.

The coil springs 64, 65 expand and contract to swing the weight 63 in the vertical direction from the balanced state by the vibration generated at the starting of the internal combustion engine 1. Then, the distal end of the claw 66, which contacts the metal plate 62, slides along the surface of the metal plate 62, thereby exposing a new surface to the heat storage material X. In this manner, the nucleation device 6 operates to generate the phase change of the heat storage material X to the solid phase so that latent heat is promptly released to the cylinder block 11. The coil springs 64, 65 end the vertical swinging of the weight 63 when the vibration generated at the starting of the internal combustion engine 1 is stopped, and keep the weight 63 in the balanced state (state shown in Fig. 13).

The fifth embodiment has the following advantages.
(51) The coil springs 64, 65 expand and contract to vertically swing the weight 63 from the balanced state by the vibration generated at the starting of the internal combustion engine 1. At this time, the distal end of the claw 66 slides against the metal plate 62, thereby exposing a new surface to the heat storage material X. The nucleation device 6 operates in this manner. Thus, for example, compared to the cases where the heat storage material is nucleated by applying electric voltage to the electrodes or inverting the disc spring, the structure of the nucleation device 6 is much simplified and the costs are reduced.
(52) The coil springs 64, 65 exert urging force to keep the balanced state of the weight 63. Thus, when the weight 63 swings vertically, the coil springs 64, 65 expand and contract alternately. The distal end of the claw 66 continually slides along the surface of the metal plate 62 until the expansion and contraction of the coil springs 64, 65 stop. This increases opportunities for the nucleation device 6 to be operated, and the phase change of the supercooled heat storage material X is easily generated. Thus, the heat is reliably radiated from the heat storage material X.

In the above-mentioned embodiments, the container 14 is arranged in the water jacket 13. However, a dedicated accommodating chamber may be formed in the cylinder block 11, and the container 14 may be arranged in the accommodating chamber.

Furthermore, in the fourth embodiment shown in Fig. 12 and the fifth embodiment shown in Fig. 13, the suspension member is configured by the coil springs 52, 64, 65. However, the suspension member may be configured by linear members such as leaf springs assembled like a pantograph. The suspension member may be anything as long as the weight is vertically swung by the vibration generated at the starting of the internal combustion engine. In other words, the suspension member may be anything as long as an impact is applied to the supercooled heat storage material to generate the phase change when adjacent linear members contact or separate from each other.

## Claims

1. A warming-up device of an internal combustion engine, **characterized by**:
a latent heat storage material (X) accommodated in the engine (1), the heat storage material (X) being capable of becoming supercooled; and
a nucleation device (2-7) provided inside the heat storage material (X), the nucleation device (2-7) including a first sliding member (23, 31, 36, 41, 53, 66) and a second sliding member (29, 33, 37, 45, 50b, 62), which slide with respect to each other, the nucleation device (2-7) operates to generate phase change of the heat storage material (X) by nucleating the supercooled heat storage material (X) from sliding portions between the sliding members.

2. The warming-up device according to claim 1, **characterized in that** the first sliding member (23, 31, 36, 41, 53, 66) and the second sliding member (29, 33, 37, 45, 50b, 62) slide with respect to each other at starting of the engine (1) .

3. The warming-up device according to claim 2, **characterized in that** the first sliding member (23, 31, 36) moves to slide with respect to the second sliding member (29, 33, 37) by pressure of fluid generated at the starting of the engine (1).

4. The warming-up device according to claim 2 or 3, **characterized in that** the first sliding member (23) is a rotating body, which rotates inside the heat storage material (X) when the engine (1) is started, the rotating body (23) including a distal end, which passes along a predetermined rotational path,
wherein the second sliding member (29) is selectively arranged on the rotational path to slide with respect to the distal end.

5. The warming-up device according to claim 4, **characterized in that**, at a temperature that corresponds to the supercooled state of the heat storage material, the second sliding member (29) automatically moves onto the rotational path, and wherein, at a higher temperature, the second sliding member automatically moves to a retracted position where the second sliding member does not slide with respect to the distal end.

6. The warming-up device according to claim 2 or 3, **characterized by** an elastic body (32), which urges the first sliding member (31, 36) in a predetermined direction when the engine (1) is stopped,
wherein, when urged in an opposite direction (C) to the predetermined direction by the pressure of fluid generated at the starting of the engine (1), the first sliding member (31, 36) slides with respect to the second sliding member (33, 37).

7. The warming-up device according to claim 3 or 6, **characterized in that** the pressure of fluid generated at the starting of the engine (1) includes one of the pressure of coolant of the engine (1), pressure of lubricant, and negative pressure of intake air.

8. The warming-up device according to claim 6, **characterized in that** the elastic body (39) protects the first sliding member (31) from the fluid.

9. The warming-up device according to claim 2, **characterized in that** the first sliding member (41, 53, 66) slides with respect to the second sliding member (45, 50b, 62) by vibration generated at the starting of the engine.

10. The warming-up device according to claim 2 or 8, **characterized in that** the first sliding member (41) is a rod-like member (41),
wherein the second sliding member (45) is a weight (45), which is slidable with respect to the rod-like member (41) by vibration generated at the starting of the engine (1).

11. The warming-up device according to claim 10, **characterized in that** the rod-like member (41) extends through a cylindrical member (43), and the weight (45) is arranged between the cylindrical member (43) and the rod-like member (41).

12. The warming-up device according to claim 2 or 9, **characterized by** a suspension member (44a, 44b, 52, 64, 65) and a weight (43, 51, 63), which is suspended by the suspension member (44a, 44b, 52, 64, 65) in the heat storage material (X) to be swingable in a predetermined swinging direction (m), the weight (43, 51, 63) being selectively arranged in a balanced state on the suspension member (44a, 44b, 52, 64, 65), and the weight (43, 51, 63) including a surface (43a, 51a, 63a) parallel to the swinging direction,
wherein the first sliding member (45, 54, 66) is a claw (45, 53, 66), which projects from the surface (43a, 51a, 63a),
wherein the second sliding member (41, 50b, 62) is a metal body (41, 50b, 62), which contacts the distal end of the claw (45, 53, 66) in the balanced state, and
wherein, when the weight (43, 51, 63) that has been in the balanced state is swung by the vibration generated at the starting of the engine (1), the distal end of the claw (45, 53, 66) slides with respect to the metal body (41, 50b, 62).

13. The warming-up device according to claim 12, **characterized in that** the suspension member (52, 64, 65) includes a coil spring (52, 64, 65).

14. The warming-up device according to claim 12 or 13, **characterized in that** the suspension member (52, 64, 65) urges the weight (53, 66) toward the metal body (50b, 62).
